# EUROPEAN PATENT SPECIFICATION

(11) **EP 2 413 630 B1**
(45) Date of publication and mention of the grant of the patent: **03.07.2013**
(21) Application number: 11175833.0
(22) Date of filing: 28.07.2011
(51) Int. Cl.: H04W 36/00, H04W 4/02, H04W 84/18

(54) **A wireless network system and a method of providing information in a wireless network system**
Drahtloses Netzwerksystem und Verfahren zur Bereitstellung von Informationen in einem drahtlosen Netzwerksystem
Système de réseau sans fil et procédé pour la fourniture d'informations dans un système de réseau sans fil

(30) Priority: 30.07.2010 GB 201012838; 12.07.2011 KR 20110069150
(43) Date of publication of application: 01.02.2012
(73) Proprietor: Samsung Electronics Co., Ltd., Suwon-si, Gyeonggi-do, 443-742 (KR)
(72) Inventor: Khandelia, Ankur, 442-742 Gyeonggi-do (KR); Azhapilli, Rajiv, 442-742 Gyeonggi-do (KR); Bencci, Germán Jose D'Jesus, Staines Middlesex TW 18 4QE (GB)
(74) Representative: Jenkins, Richard Gavin

(56) References cited:
- DE-A1-102007 015 916
- US-A1- 2003 117 316
- Christian Dannewitz: "An IEEE 802.21-based Universal Information Service", , 16 April 2006 (2006-04-16), pages 1-5, XP002660563, Retrieved from the Internet: URL:http://www.cs.uni-paderborn.de/fileadm in/Informatik/AG-Karl/projects/benq/WWRF16 _Paper_-_802_21_-_Dannewitz.pdf [retrieved on 2011-10-04]

## Description

### 1. Technical Field

The present invention relates generally to a wireless network system, and in particular, to a wireless network system including a mobile device, an information server and a method of providing information in the wireless network system.

### 2. Description of Related Art

Several different wireless networks may coexist in one particular location. For example several networks may be offered by different providers and different wireless network technologies may overlap. In such a heterogeneous wireless network system, mobile devices may have a choice of available access points a particular location, and such options may frequently change as the mobile devices move around to different locations with different network systems.

Protocols such as Institute of Electronics and Electrical Engineers (IEEE) 802.21, as well as other protocols, have been developed in order to provide handover services that assist HandOver (HO) from one access point to another access point, and from one type of network to another type of network, while maintaining services over the wireless networks to the mobile devices. These protocols provide additional services such as predictive handovers, wherein a handover to another access point is initiated before a signal from a current access point is lost, in order to minimize downtime between access points. However, some mobile devices (e.g. non-MIH devices) are unable to participate in these additional services for media independent handovers. For example, W02006/052,805 describes a Media Independent Handover (MIH) method featuring a simplified beacon for MIH services.

Many mobile devices are able to generate location information that corresponds to a geographical location of the mobile device. The location information allows the mobile device to obtain location based services that are relevant to that specific geographical location. For example, location information may be provided in order to access additional services for media independent handovers, such as the predictive handovers based on the current geographical location of the mobile device. However, obtaining the location information tends to increase the power consumption of the mobile device and shortens battery life. The wireless network also carries additional network traffic in order to provide the location information and support the location based services of the mobile device. Meanwhile, devices that are not equipped to generate the location information (e.g., devices without a Global Positioning System (GPS) locator) are unable to take advantage of these location based services.

DE-10 2007 015 916 -A1 discloses a method for providing location data of a first mobile terminal to a second mobile terminal in a media independent handover MIH (media independent handover) system. The method comprises the steps of: sending a request for obtaining a location data reference for location data from the first mobile terminal to a location server, generating the requested location data reference by the location server, sending the generated location data reference from the location server to the first mobile terminal, transmitting the received location data reference from the first mobile terminal to the second mobile terminal, transmitting a request for the location data of the first mobile terminal from the second mobile terminal to the location server, indicating the reference location data and transmitting the requested location data of the first mobile terminal from the location server to the second mobile terminal.

US-2003/117316-A1 discloses systems and methods for locating and tracking a wireless device including a database remotely located from the wireless device, the database operable for receiving and storing position information from the wireless device at a predetermined interval. The systems and methods also including a wireless network operable for communicating the position information from the wireless device to the database and a first algorithm operable for providing the position information upon request. The systems and methods further including a second algorithm allowing modification of the predetermined interval, a third algorithm operable for associating a landmark with the position information, a fourth algorithm operable for causing the position of the wireless device to be determined locally at the predetermined interval, a fifth algorithm operable for causing the position information to be stored locally within the wireless device, and a sixth algorithm operable for causing the position information to be communicated to the database via the wireless network when the battery power of the wireless device reaches a predetermined level. The position information is provided to a user via a landline phone and a public switched telephone network (PSTN), a finding wireless device and the wireless network, or a personal computer (PC) and a globally-distributed computer network. The position information is provided to the user in the form of a voice synthetic message, a text message, or a graphical display.

Accordingly, there is a desire to achieve a wireless network system wherein information is provided efficiently. For example, there is a desire to achieve a wireless network system wherein network traffic is reduced, to conserve battery power of the mobile devices, and to achieve a method of providing information in a wireless network system wherein the information is efficiently provided.

### SUMMARY OF THE INVENTION

Accordingly, embodiments of the present invention aim to solve the above-mentioned problems occurring in the prior art, and aim to provide a wireless network system including a mobile device and an information server, and a method for providing information in the wireless network system.

According to a first aspect of the present invention there is provided a wireless network system including a plurality of wireless networks, the wireless network system comprising: a plurality of mobile devices coupled to the plurality of wireless networks, the plurality of mobile devices including at least a first mobile device and a second mobile device; and an information server coupled to each of the plurality of wireless networks, wherein the information server is arranged to provide handover messages to the plurality of mobile devices to assist the mobile devices in performing a handover from one wireless network to another wireless network; wherein the first mobile device is arranged to negotiate information sharing rules with the information server; wherein the first mobile device is arranged to provide, to the second mobile device, shared information according to the information sharing rules; and wherein the second mobile device is arranged to use the handover messages and the shared information to perform a predictive handover from one wireless network to another wireless network.

According to a second aspect of the present invention there is provided a method of providing information in a wireless network system including a plurality of wireless networks and a plurality of mobile devices coupled to the plurality of wireless networks, the plurality of mobile devices including at least a first mobile device and a second mobile device, the method comprising: sending, by an information server) coupled to each of the plurality of wireless networks, handover messages to the plurality of mobile devices to assist the mobile devices in performing a handover from one wireless network to another wireless network; negotiating, by the first mobile device, information sharing rules with the information server; and providing, by the first mobile device, shared information to a second mobile device according to the information sharing rules; and using, at the second mobile device, the handover messages and the shared information to perform a predictive handover from one wireless network to another wireless network.

### BRIEF DESCRIPTION OF THE DRAWINGS

The above and other aspects, features and advantages of the present invention will be more apparent from the following detailed description taken in conjunction with the accompanying drawings, in which:
FIG. 1 is a schematic diagram illustrating a wireless network system according to an embodiment of the present invention;
FIG. 2 is a detailed schematic diagram illustrating the wireless network system according to an embodiment of the present invention;
FIG. 3 is a schematic diagram illustrating a wireless network system according to an embodiment of the present invention;
FIG. 4 is a flowchart illustrating a method of providing information in a wireless network system according to an embodiment of the present invention;
FIG. 5 is a flowchart illustrating another method of providing information in a wireless network system according to an embodiment of the present invention;
FIG. 6 is a schematic diagram of a wireless network system according to an embodiment of the present invention;
FIG. 7 is a schematic diagram illustrating an example wireless network system according to an embodiment of the present invention;
FIG. 8 is a schematic diagram illustrating a wireless network system according to an embodiment of the present invention; and
FIG. 9 is a schematic diagram illustrating a wireless network system according to an embodiment of the present invention.

### DETAILED DESCRIPTION OF THE EMBODIMENTS OF THE PRESENT INVENTION

Hereinafter, embodiments of the present invention are described with reference to the accompanying drawings. In the following description, the same elements will be designated by the same reference numerals although they are shown in different drawings. Further, a detailed description of known functions and configurations incorporated herein will be omitted for the sake of clarity and conciseness.

Embodiments of the present invention are described herein with reference to independent handover in a heterogeneous network system. The following examples relate in particular to media independent handover using the IEEE802.21 protocol as described, for example, at www.ieee802.org. However, the principles and teachings herein are also applicable to other convergence technologies for heterogeneous networks, as will be appreciated from the following description and discussion.

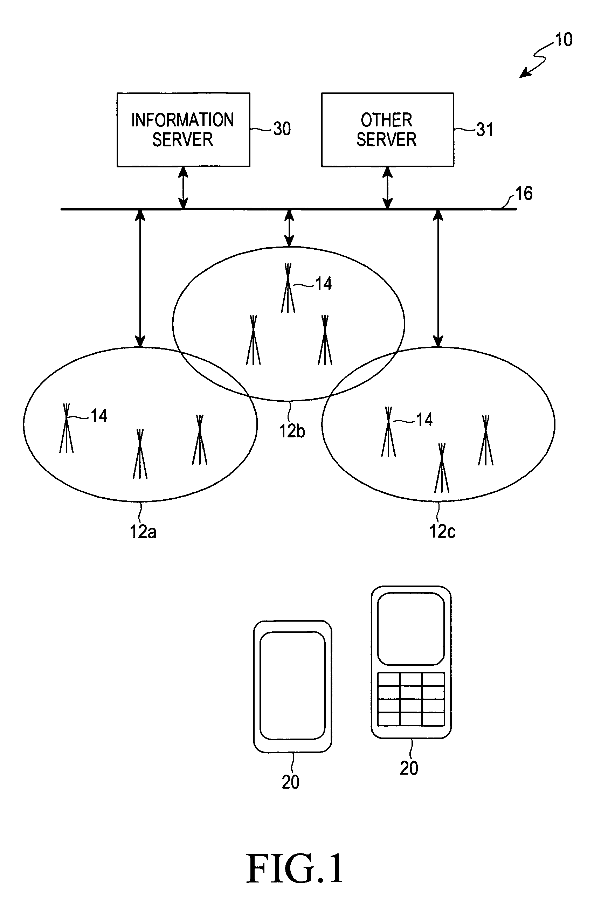

FIG. 1 is a schematic diagram of an example heterogeneous wireless network system.

Referring to FIG. 1, a wireless network system 10 includes one or more wireless networks 12a, 12b, 12c each with an associated set of the access points 14, so that many individual mobile devices 20 can access the wireless networks from diverse locations. The network 10 will typically span entire cities, regions or countries. The many access points 14 often have overlapping coverage at specific locations (such as in an airport or on a particular street), where the mobile devices 20 may choose between the available access points 14. This set of available access points 14 changes frequently as the mobile devices 20 move around the region covered by the wireless network system 10.

According to embodiments of the present invention, the wireless networks 12a-12c use a plurality of wireless network technologies. The wireless networks 12a-12c may include cellular telephony networks using technologies such as Global System for Mobile communication (GSM), General Packet Radio Service (GPRS), Enhanced Data Rates for GSM Evolution (EDGE), or Code Division Multiple Access (CDMA), or wireless local area networks such as IEEE802.11 (Wireless Fidelity (WiFi)) or IEEE802.16 (Worldwide Interoperability for Microwave Access (WiMAX)), amongst others, as will be familiar to those skilled in the art. More recently, protocols and standards such as IEEE802.21 have been developed to aid media independent handovers from one access point 14 to another and from one network 12 to another, while maintaining services to the mobile devices 20. Most wireless networks 12 provide homogeneous (horizontal) handovers within the same network. However, IEEE802.21 is an example of convergence for MIH, which also supports vertical handovers in a heterogeneous network system. Other examples include Unlicensed Mobile Access/Generic Access Network (UMA/GAN) as part of European Telecommunications Standards Institute 3rd Generation Partnership Project (ETSI 3GPP), and Access Network Discovery And Selection Function (ANDSF).

The access points 14 include any suitable equipment or station used to provide a network connection or point of access to communicate wirelessly with the mobile devices 20. For example, the access points include base stations or base transceivers for routing network traffic to the mobile devices 20.

The mobile devices 20 (also referred to as "Mobile Nodes" (MNs)) are capable of connecting to one or more of the wireless networks 12. Typically, the mobile devices 20 are smartphones, Personal Digital Assistants (PDAs), notebooks, webbooks or other suitable portable communication devices. These mobile devices 20 suitably have multi-radio capabilities and are capable of connecting to several different types of the wireless networks 12.

One or more wired backbone networks 16 may be provided coupled to the wireless networks 12. These backbone networks allow services to be provided across each of the wireless networks 16. The backbone may be based on Internet Protocol (IP), or other protocols.

As shown in FIG. 1, a plurality of servers are coupled to the wireless networks 12. In this simplified example, an information server 30 and another network server 31 are provided. These servers 30, 31 provide services to the mobile devices 20 over the networks 12. For example, the information server 30 may be an information server for handover services, such as a Media Independent Information Server (MIIS) for MIH. The information server 30 may be compatible with a protocol for media independent handover, such as 802.21, UMA/GAN, or ANDSF.

The information server 30 suitably includes a list of available networks (802.11/16/22, GSM, UMTS, etc), link layer information, and neighbor maps that plot the geographical location or coverage area of particular access points 14. The information server 30 may also provide higher layer services (e.g. internet service provider ISP, multimedia server MMS, etc). In particular, the information server 30 provides an information service that assists network discovery and selection, which leads to more effective handover decisions by the mobile devices 20.

In one example according to an embodiment of the present invention, the mobile devices 20 provide cell information based on their current access point 14. The information server 30 is suitably arranged to respond with events or notifications that assist handovers from one access point 14 to another. The handover may be initiated by the mobile device 20 and is assisted by the information server 30 based on information generated by the mobile device (such as the cell information). In another example, the handover is initiated by the current serving network 12a and is assisted by information server 30 based on the provided information. Suitably, the information server 30 provides handover data that allows the mobile device 20 or the network 12a, as appropriate, to decide whether a handover is required and to select the target access point 14 that will be used next. The handover can then be performed quickly and efficiently with minimal loss of service for the applications or services that are being executed on the mobile device 20.

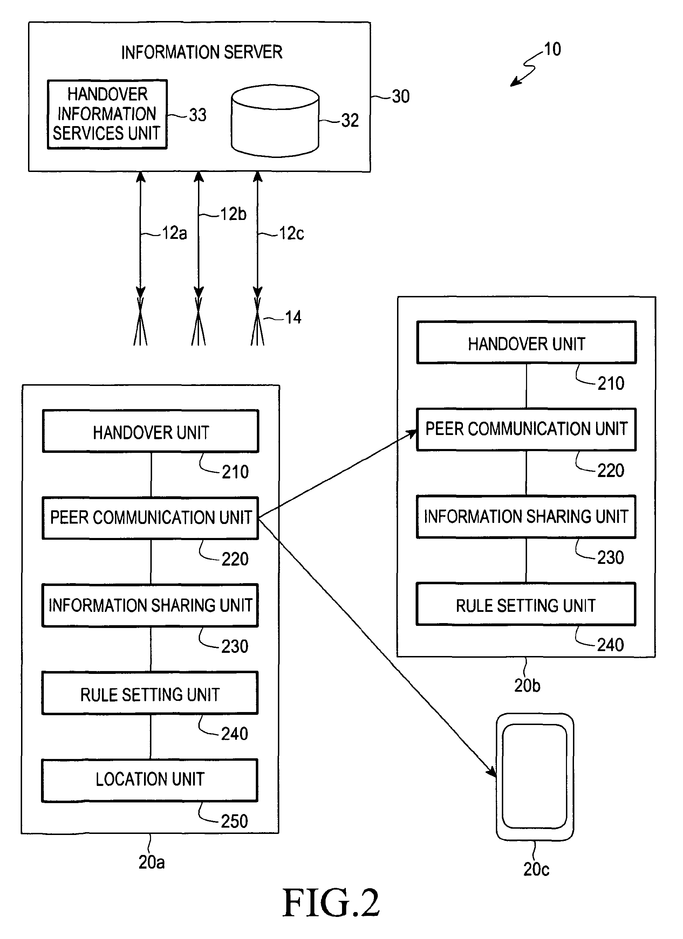

FIG. 2 is a schematic diagram illustrating a wireless network system 10 in more detail according to an embodiment of the present invention.

Referring to FIG. 2, the wireless network system 10 includes the information server 30, a first mobile device 20a, a second mobile device 20b, and a third mobile device 20c. The information server 30 includes an information sharing rule database 32 and a handover information services unit 33. The first mobile device 20a and the second mobile device 20b each include their own handover unit 210, peer communication unit 220, information sharing unit 230, and rule setting unit 240.

As discussed above, the handover unit 210 communicates with the networks 12 to perform efficient handovers between the access points 14. As one example, the handover unit 210 is arranged to communicate with the information server 30 according to a handover protocol, such as 802.21, etc., as discussed above.

Handover messages may be exchanged between the networks 12 and the mobile device 20 performing the handover. These messages may include event notifications such as "wireless link going down", commands such as "Initiate Handover" which may also include a list of alternative access points, or an information service such as performance information (e.g., delay from the wireless layer), network information (e.g. a request for the current Internet Service Provider (ISP) Name), or the availability of location-based services.

In a typical handover procedure, the handover unit 210 in the mobile device 20a receives a "link going down" indication relating to a cellular network 12a that the mobile device is currently using (also termed the "serving network"). The handover unit 210 may determine from policy configuration parameters whether the link has become less than a threshold value for a specified period of time. If the link has become less than the threshold value, the handover unit 210 triggers a "Get Information Request" to the information server 30. The serving network 12a then responds with information about neighboring networks 12b, 12c, which includes a list of the networks, their cost of connection, security parameters, quality of service, operator identity, etc. Suitably, this neighbor information is based on cell identity information provided by the mobile device 20a relevant to the current access point 14. The handover unit 210 then evaluates the list of networks based on its policy configuration parameters and decides one or more candidate networks. The handover unit 210 then sends the selected candidate networks 12b, 12c a query request such as a "candidate query request". This query request is typically passed to a mobility management server (not shown) in that candidate network 12b, 12c.

After a candidate query response from the candidate network, the handover unit 210 sends a "commit request" to the mobility management server in the respective candidate network. After a commit response, the handover unit 210 starts preparing a selected link adaptor, by opening up the link adapter for the new network 12b, 12c or new access point 14. When the adaptor opening is successful, the handover unit 210 sends a "complete request" to the new candidate network 12b or 12c. After the "complete request" is transmitted, the handover unit 210 informs relevant applications executing on the mobile device 20a (e.g., Voice Call Continuity (VCC), Session Initiation Protocol (SIP), Mobile Internet Protocol (MIP), etc) to handover to the selected candidate network 12b or 12c.

A change from one of the access points 14 to another access point 14 in the same network 12a, 12b, 12c, is usually supported by the relevant wireless technology of that network. For example, a Voice over Internet Protocol (VoIP) call from a WiFi handset to a WiFi access point can be handed over to another WiFi access point within the same network, e.g. within a corporate network. However, if the handover is from a WiFi access point in a corporate network to a public WiFi hotspot, then a vertical handover is required, because the two access points cannot communicate with each other at a link layer, and are in general on different IP subnets.

As shown in FIG. 2, the peer communication unit 220 is arranged to communicate directly with other mobile devices, such as with the second mobile device 20b and/or the third mobile device 20c, which are in the locality of the first mobile device 20a. As one example, the peer communication unit 220 performs personal area networking, such as using Bluetooth. As another example, the peer communication unit 220 may use Near Field Communication (NFC). Thus, the peer communication unit 220 is able to communicate directly with the other nearby devices 20b, 20c.

The information sharing unit 230 shares information from the first mobile device 20a with the other devices 20b, 20c using the peer communication unit 220. More specifically, the information sharing unit 230 suitably broadcasts the information to the nearby devices 20b, 20c, according to information sharing rules.

The rule setting unit 240 negotiates the information sharing rules with the information server 30 and sets the sharing rules in the mobile device 20a. The information sharing unit 230 then applies these sharing rules to determine the information sharing with the other nearby devices 20b, 20c.

As shown in FIG. 2, the information sharing rule database 32 suitably holds the information sharing rules relevant to each of the capable mobile devices 20a, 20b. In the present example, these rules are negotiated by the handover information services unit 33 during a "capability exchange" message between the relevant mobile device 20a, 20b and the information server 30. The rules can be updated, such as by using a "get_information_indication" service. The information sharing rules may be negotiated for the first mobile device 20a according to "Information sharing allowed when battery is above 50%". Thus, the information sharing rules are based on a device status of the mobile devices. This device status relates to a hardware component of the mobile devices, such as the battery. As an alternative, the sharing rules may be based on a location of the mobile devices (e.g., by sharing information when "away from home", but not when "at home", or vice versa).

As one example, the first mobile device 20a further includes a location unit 250 such as a GPS location unit that calculates location information (e.g., location coordinates) based on satellite signals. Positioning devices other than a GPS device may also be used in accordance with embodiments of the present invention. The mobile device 20 transmits the calculated location information to the information server 30 using the handover unit 210. The location information may further include direction information and/or speed information, which may be obtained from speed sensors and/or direction sensors within the mobile device 20a, or by plotting successive locations over time.

In the present example, the second mobile device 20b also communicates with the information server 30. The handover unit 210 within the second mobile device 20b informs the information server 30 of information sharing request information relevant to the second mobile device 20b, such as location information, device status information and device requirements.

The second mobile device 20b requests the information server 30 to provide assistance from other devices for obtaining GPS-type location information. Therefore, the second mobile device 20b seeks to receive a function or feature that can be fulfilled by sharing information.

The second mobile device 20b may informs the information server 30 of its location, thereby enabling the information server 30 to identify other nearby devices that are suitable for sharing information.

The second mobile device 20b may scan for other nearby mobile devices to obtain identity information of the nearby devices. For example, the second mobile device 20b may scan for nearby devices using the peer communication unit 220 and obtains the peer communication identity (e.g. Bluetooth identity) of, in this case, the first mobile device 20a. The second mobile device 20b then transfers the gathered identity to the information server 30 to identify the first mobile device 20a as a candidate for providing information.

The information server 30 then refers to the rule setting database 32 and issues a command to one or more of the mobile devices near to the second mobile device 20b based on the negotiated rules. In one example, the information server 30 may contact the identified first mobile device 20a to perform the rules negotiation or update the negotiated rules, triggered by this request for information sharing made by the proximal second device 20b.

The first mobile device may contain an identifier with a tag that identifies the first mobile device 20a to the information server 30 (e.g. a Bluetooth identifier). Further, this tag suitably indicates whether the device is capable of performing the information sharing. For example, the tag may contain "MIH" to identify that this device is MIH compatible. When the second mobile device 20b has a functionality or information requirement, the second mobile device 20b scans the nearby devices to identify compatible devices. After the first mobile device 20a is identified as a potentially compatible device, the information sharing rules are negotiated and then implemented with the information server 30.

The information server 30 issues an information sharing command, which is received via the handover unit 210 of the first mobile device 20a and is passed to the information sharing unit 230. In response, the peer communication unit 220 transmits the location information generated by the location information unit 210 over the peer communication network, such as Network File System (NFS) or Bluetooth, to be received by the nearby second mobile device 20b.

As noted above, the first mobile device 20a is arranged to negotiate the information sharing rules with the information server 30 during a capability exchange message between the first mobile device 20a and the information server 30. During the capability exchange message, the first mobile device 20a may include shared information embedded in one of the messages. For example, within the message 'get info request (location)', the first mobile device 20a may include its location. This message is normally used for identifying nearby access points 14 for handover procedures.

The information server 30 extracts the shared information from the first mobile device 20a during the capability exchange message, and then transmits the shared information to the second mobile device 20b.

After the information server 30 receives the capability exchange message, such as 'get info request (location)', the information sever 30 may extract the location information of the first mobile device 20a and transmit the extracted location information to the second mobile device 20b, if the information sharing rules have already been negotiated.

Table 1 is an example of the message structure used to establish the information sharing rules with the mobile devices 20. In the example of Table 1, the information sharing rules are exchanged using structured information such as XML.

**Table 1**

| MIH Header |
|---|
| Source Identifier = sending MIHF ID (Source MIHF ID TLV) |
| Destination Identifier = receiving MIHF ID (Destination MIHF ID TLV) |
| InfoResponseBinaryDataList (optional) |
| InfoResponseRDFDataList (optional) |

Table 2 s an example of an information response provided from the information server 30 to the mobile device 20. In the example of Table 2, the information server 30 sets an information sharing rule in which the first mobile device 20a is expected to share GPS location information with the mobile device having the client identity "Client MIHF_ID 1" for the next 10 minutes, provided that the battery level of the first mobile device 20a remains above "70%".

**Table 2**

| Sample Info response RDF Data List from information server: |
|---|
| 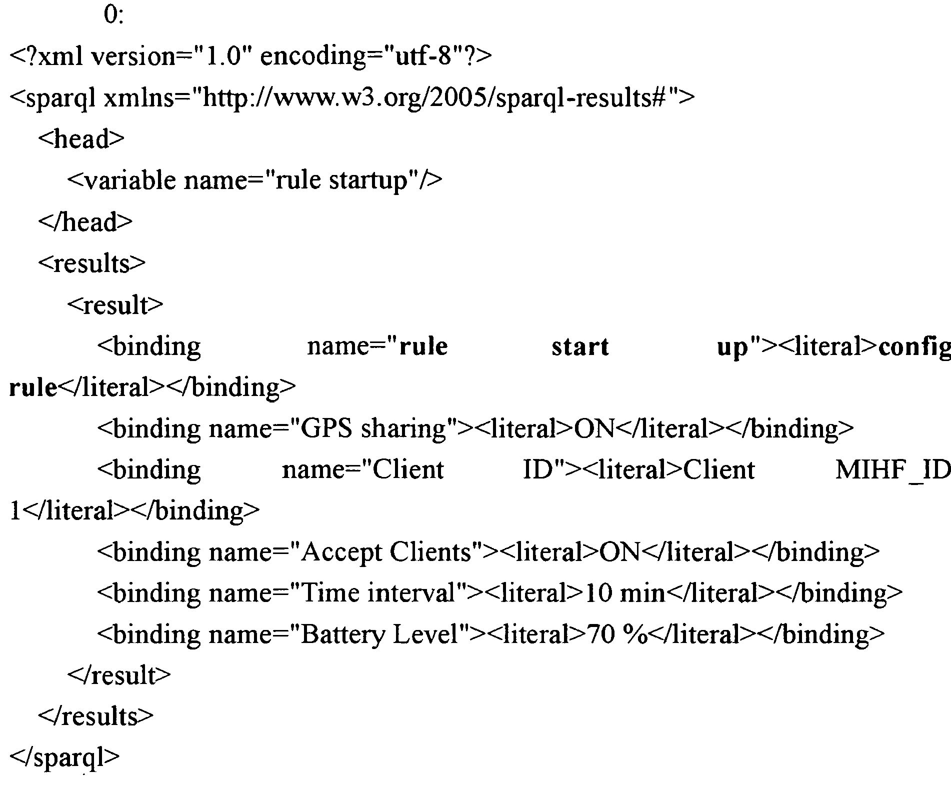 |

The mobile devices 20a, 20b transmit a "get information _client" request message and a corresponding "get_information_client" response message for this peer-to-peer communication between the mobile devices 20a, 20b, thereby using the close community communication interface (such as Bluetooth interface) to share information directly between the devices.

The information sharing is performed by the first mobile device 20a, which has a relatively high battery power in order to assist the second mobile device 20b, which has a relatively low battery power. The second mobile device 20b does not itself have a GPS function (i.e., the second mobile device 20b is a non-GPS device), but the second mobile device 20b is now able to take advantage of the GPS location provided by the first mobile device 20a in an efficient manner. In another example, the second mobile device 20b may be provided with a corresponding GPS unit 250, but the GPS unit 250 of the second mobile device 20b can be temporarily switched off at to conserve power. Further, since the first and second devices 20a and 20b share information directly by the peer communication, overall traffic on the wireless networks 12 can be reduced.

Typically, the location based services are provided at a coarse level based on a cellular location, such as a cell identity of the current access point 14. However, the location based services are also provided on a fine level when the more accurate and detailed coordinate-based location information is available, such as specific coordinates derived from the GPS location unit 250. Therefore, using the coordinate based location information, such as GPS location information shared by the first mobile device 20a, allows for better service to be obtained by the second mobile device 20b when it is located near the first mobile device 20a.

The sharing roles as information provider and information receiver may be changed or redistributed periodically. For example, after a predetermined period, the second mobile device 20b reactivates its GPS location unit 250 and shares the GPS location information with the first mobile device 20a, while the GPS unit 250 of the first mobile device 20a is turned off to conserve power.

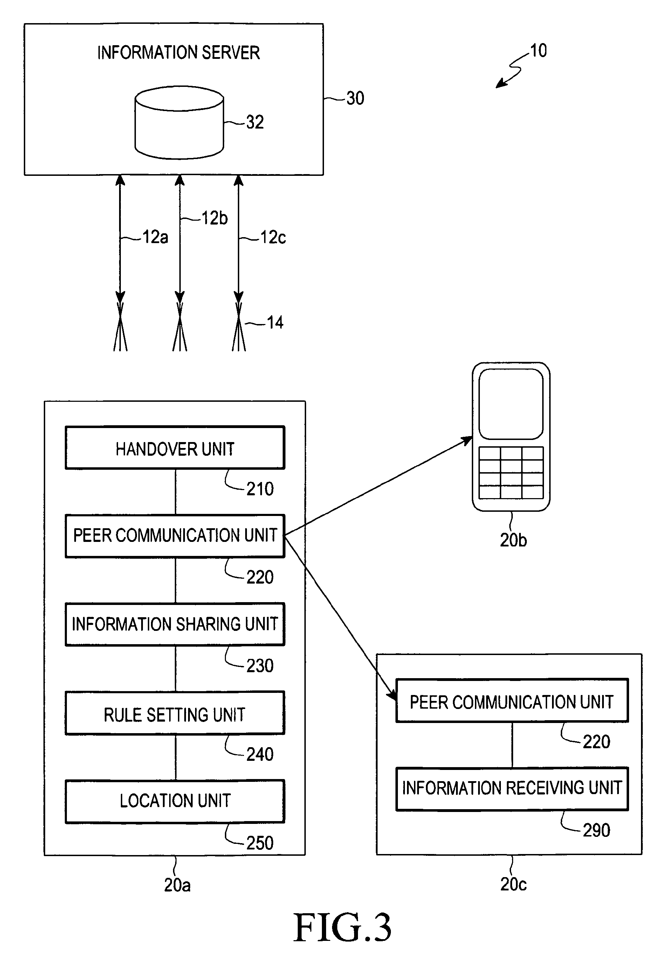

FIG. 3 illustrates an embodiment including the same mobile devices 20a, 20b, 20c, etc., as discussed above. Referring to FIG. 3, the third mobile device 20c includes the peer communication unit 220 such as Bluetooth or NFS, and therefore, is also capable of receiving the information being shared by the first mobile device 20a. The third mobile device 20c also includes an information receiving unit 290 that processes and delivers the received shared information to be used by applications within the third mobile device 20b. The third mobile device 20a does not include the handover unit 210, and therefore, is not capable of communicating directly with the information server 30. However, the third mobile device 20a is still able to benefit from the information sharing that has been triggered using the information server 30.

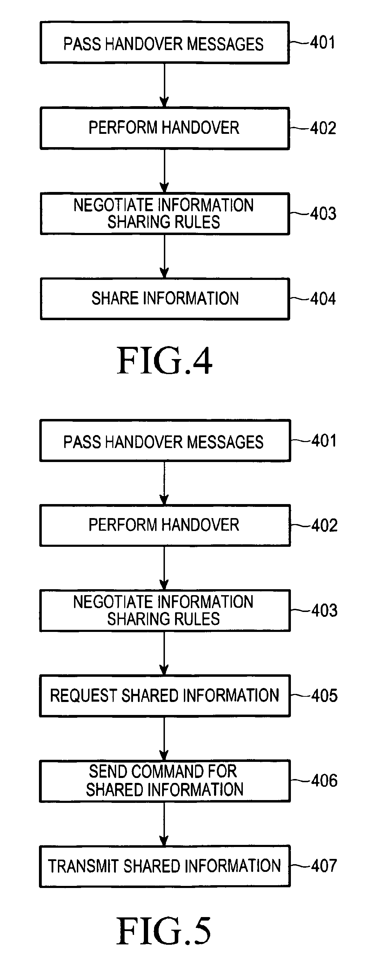

FIG. 4 is a flowchart illustrating an example method of providing information in a wireless network system according to an embodiment of the present invention. The method of FIG. 4 is performed by the information server 30 and the mobile devices 20, etc, as discussed herein.

Referring to FIG. 4, in step 401, the handover messages are exchanged between the information server 30 and the plurality of mobile devices 20a, 20b, 20c. In step 402, at least one of the mobile devices 20a from one of the wireless networks 12a performs a handover to another of the wireless networks 12b using the handover messages. In one example, the at least one of the mobile devices 20 performs the handover from one of the access points 14 within the first network 12a to one of the access points 14 on the second network 12b using access point information provided by the information server 30 in the handover messages. In step 403, the first mobile device 20a negotiates the information sharing rules with the information server 30. For example, the first mobile device 20a may allow sharing of GPS location information when the battery level of the first mobile device 20a is above 50%.

In step 404, information from the first mobile device 20a is directly shared with the second mobile device 20b via peer communication (such as Bluetooth) according to the information sharing rules. Here, the second mobile device 20b is located close to the first mobile device 20a. The information sharing continues for a predetermined period. Optionally, the information sharing roles may be reversed, after the predetermined period, with the second mobile device 20b now sharing GPS location information with the first mobile device 20a.

FIG. 5 is a flowchart illustrating another method of providing information in a wireless network system according to an embodiment of the present invention. Steps 401, 402 and 403 are the same as described herein with respect to FIG. 4. In step 405, a request for information sharing is sent from the second mobile device 20b to the information server 30. This request is conveniently based on a hardware component of the second mobile device, such as whether a GPS unit is present in the mobile device 20b, whether the GPS unit is turned off, or whether a power level of a battery is below a preset threshold.

In step 406, a command for information sharing is issued to the first mobile device 20a according to the information sharing rules. More specifically, the information server 30 checks the information sharing rule database 32 and determines that the first mobile device 20a is willing to share GPS information and is located near to the second mobile device 20b. The information server 30 then issues the command to the first mobile device 20a accordingly. For example, the command requests information sharing of GPS location information for a period of 10 minutes and provides the Bluetooth identity of the second mobile device 20b. In a manner similar to step 404 above, in step 407, the shared information is transmitted, via the peer communication, from the first mobile device 20a to the second mobile device 20b in response to the command and according to the information sharing rules.

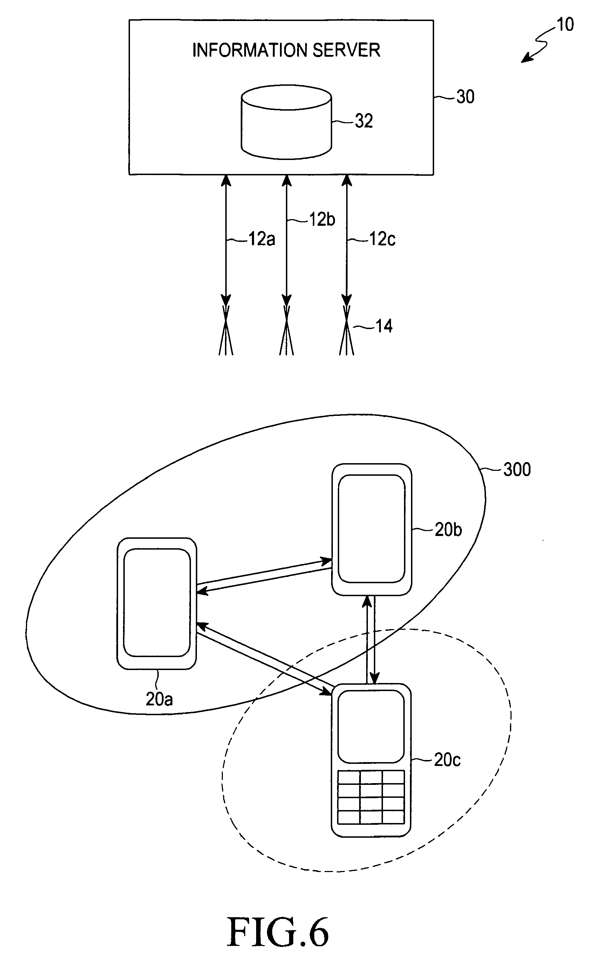

FIG. 6 illustrates an example a wireless network system 10 including the same mobile devices 20a, 20b & 20c, etc., as discussed above, according to an embodiment of the present invention.

Referring to FIG. 6, the information server 30 aggregates a plurality of the mobile devices 20a, 20b & 20c into a sharing group 300 based on the location information provided by the mobile devices 20a, 20b & 20c. In the present example, the information server 30 determines that the first mobile device 20a and the second mobile device 20b are in the same location and are suitable for sharing information using the peer communication. As a result, the information server 30 allocates the first and second mobile devices 20a, 20b as a sharing group, and triggers the information sharing between the devices as described above. In the present example, the first mobile device 20a shares GPS location information, and the GPS unit 250 of the second mobile device 20b is temporarily switched off to conserve power.

The information server 30 may also form the sharing group based on the speed and direction information received from the mobile devices 20a, 20b & 20c. For example, if the mobile devices 20a, 20b & 20c are all on board a train, the mobile devices 20a, 20b & 20c will travel along the same path at the same speed. In this case, the information server 30 triggers the information sharing group based on this coordinated location information. The information is then shared by peer communication among the mobile devices 20a, 20b & 20c in the sharing group 300 according to the previously arranged sharing rules. Further, the third mobile device 20c, which is also travelling on the same train, can also now receive the shared information from the first mobile device 20a over the peer communication.

According to an embodiment of the present invention, the information server 30 may send predictive events or notifications, such as to assist a predictive handover from one access point 14 to another. Conveniently, these predictive events or notifications take advantage of location information provided by the mobile devices 20a, 20b & 20c. Hence, the GPS coordinate-based location information allows the location based service to be provided at a detailed level. As described above, the information sharing of GPS location information by the first mobile device 20a allows the second mobile device 20b to take advantage of this location based service. In this example, the mobile devices 20a, 20b & 20c in the sharing group 300 share access point information relating to the access points 14 of the wireless networks 12a-12c. More specifically, the information server 30 provides predictive notifications concerning a sequence of the access points 14 that will be available to the sharing group based on the provided location information and path information (e.g., speed & direction).

For example, the mobile devices 20a, 20b & 20c of the sharing group 300 may be determined to be on a train and will encounter an access point A, then a tunnel with no coverage, followed by an access point B. This access point information is shared from the first mobile device 20a to the second mobile device 20b, etc. Sharing this access point information between the mobile devices 20a, 20b & 20c reduces overall network traffic compared with the information server 30 providing the access point information directly to each of the devices separately. Further, the shared access point information is also provided to other devices such as the third mobile device 20c. In this example, the devices 20a, 20b & 20c in the sharing group 300 are all now able to predict the loss of coverage in the tunnel and prepare their respective applications accordingly, such as putting an application on hold while there is no network coverage. Further, all of the devices 20a, 20b & 20c are provided with the access point information to perform a predictive handover to the access point B ready for when the train emerges from the tunnel. In this example, each of the devices 20a, 20b & 20c in the sharing group 300 experience a better service, the service is extended to a wider group of devices, and overall network traffic is reduced.

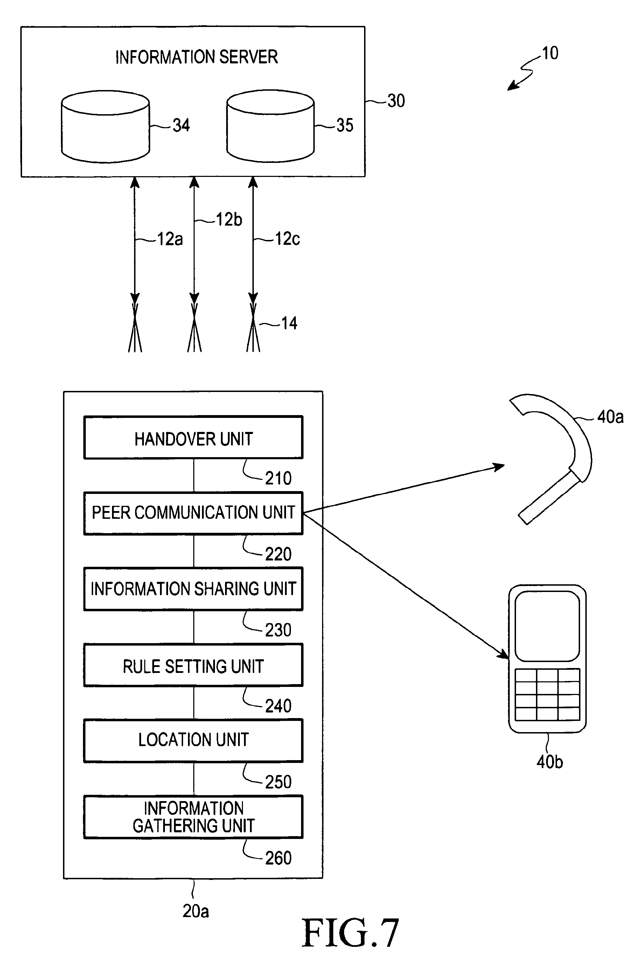

FIG. 7 illustrates another example of a wireless network system including the same mobile devices 20a, 20b, etc..

Referring to FIG. 7, users frequently misplace important devices such as their mobile phone, Bluetooth headset, etc. In the example of FIG. 7, the mobile device 20a includes an information gathering unit 260 that gathers and selectively stores peer information about a plurality of peer communication devices 40a, 40b. This information is gathered by the peer communication unit 220 according to the previously determined information gathering rules. These information gathering rules are suitably negotiated by the rule setting unit 240. The information gathering rules may be stored centrally in an information gathering rules database 34 at a remote server such as the information server 30.

An information gathering rule may be set whereby the information gathering unit 260 is arranged to gather and store a peer communication identity of each peer device 40a, 40b that is encountered by the peer communication unit 220, and to store the peer communication identity associated with location information when the peer device 40a, 40b becomes out of range. In this case, the information gathering rule is may have a form such as shown in Table 3.

**Table 3**

| RULE: |
|---|
| <Store Bluetooth devices WHEN out of coverage> |
| <Periodicity= 1 day> |

In this example according to Table 3, whenever a Bluetooth device in the local system goes out of range, the information gathering unit 260 immediately stores the Bluetooth ID, Time, and GPS location of that peer device 40a, 40b.

Later, when the user wishes to find the misplaced peer device, in this case their Bluetooth headset 40a, the information gathering unit 260 retrieves the gathered peer information which indicates the last known position of the peer device. Accordingly, the user is better able to track and locate lost devices.

The mobile device 20 may upload all of the gathered peer information to the remote server, such as the information server 30, to be stored in a gathered information database 35. The gathered information may be uploaded periodically as set in the information gathering rules, such as once every day, as indicated by Table 3 above.

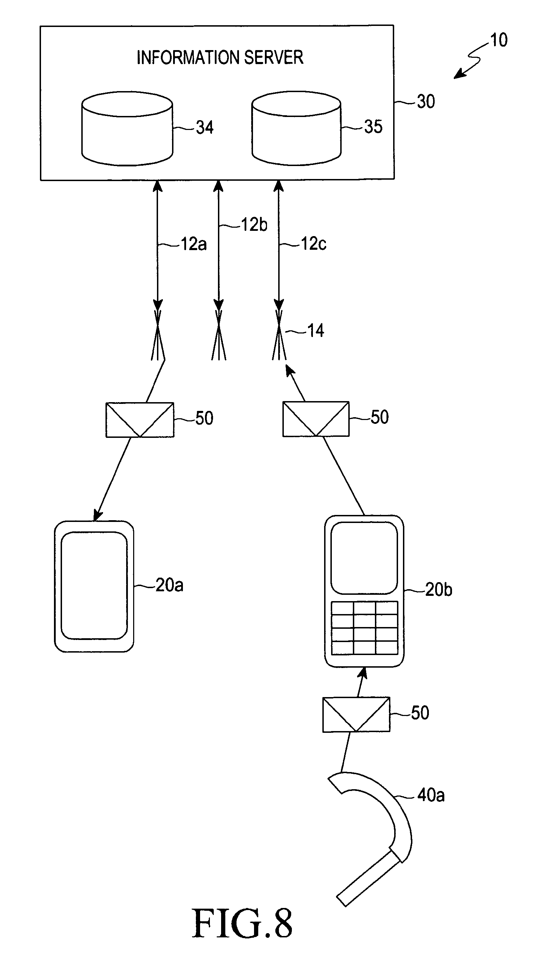

FIG. 8 illustrates another example of a wireless network system including the same mobile devices 20a, 20b, 20c, etc., as discussed above.

Referring to FIG. 8, each of the plurality of mobile devices 20a, 20b, 20c have an information gathering unit 260, and therefore gather the peer information 50 using the peer communication unit 220 for each of the peer devices 40a, 40b that are encountered. As a result, by uploading this gathered peer information 50 to the remote server, such as the information server 30, a collaborative database 35 of the gathered peer information is assembled.

As an example, suppose the user of the first mobile device 20a misplaces their Bluetooth headset 40a. Meanwhile, the headset 40a is encountered by the second mobile device 20b, which gathers and uploads the relevant peer information 50 to the database 35. Later, the first mobile device 20a sends an information request for the peer information relevant to this peer identity (e.g., by providing the Bluetooth ID of the headset 40a), and, in response, the remote server 30 provides the gathered peer information 50 as gathered by the second mobile device 20b providing the last-known time and location information for the headset 40a.

Table 4 is an example of a request made by the information server 30 to the mobile device 20 similar to Table 2 above, but additionally requesting information relating to two Bluetooth objects. Table 5 is an example of a corresponding response from the mobile device 20, which provides GPS location information relating to these two devices.

**Table 4**

| Sample Info response RDF Data List from server: |
|---|
| 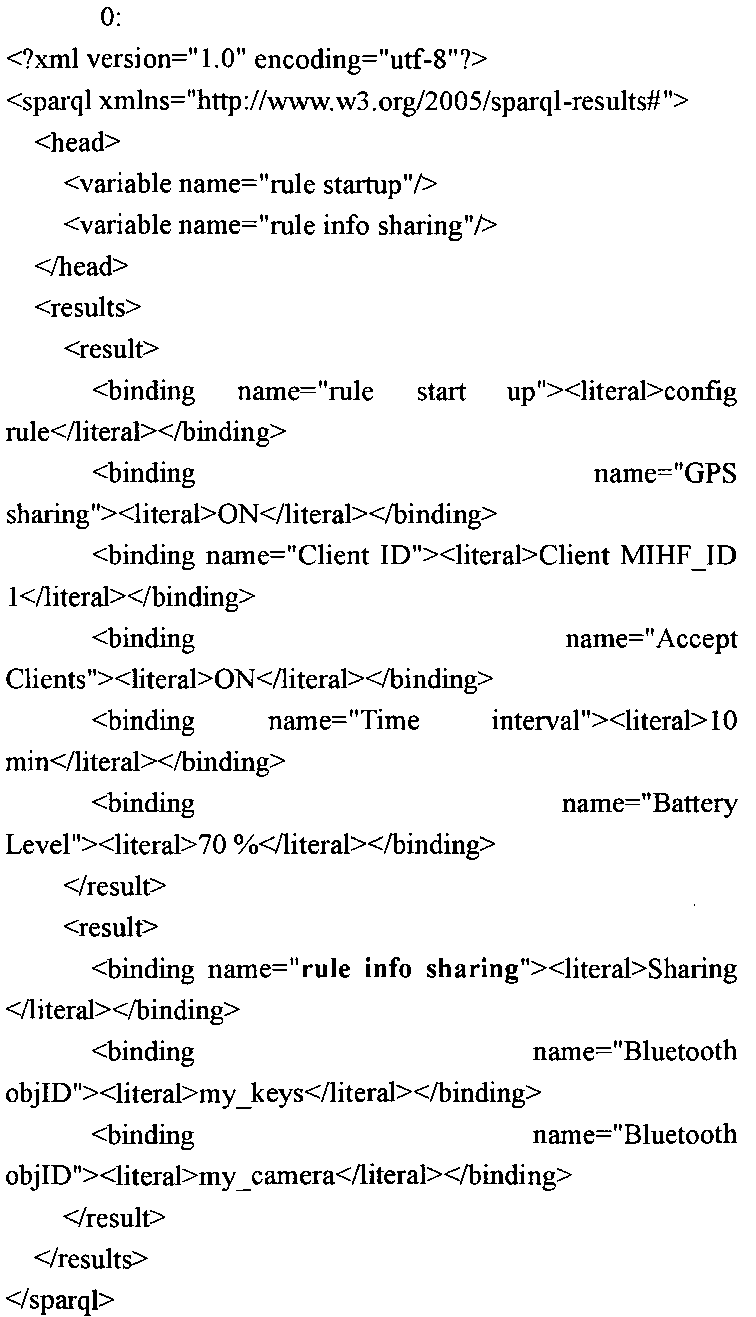 |

**Table 5**

| Sample Info response RDF Data List from client: |
|---|
| 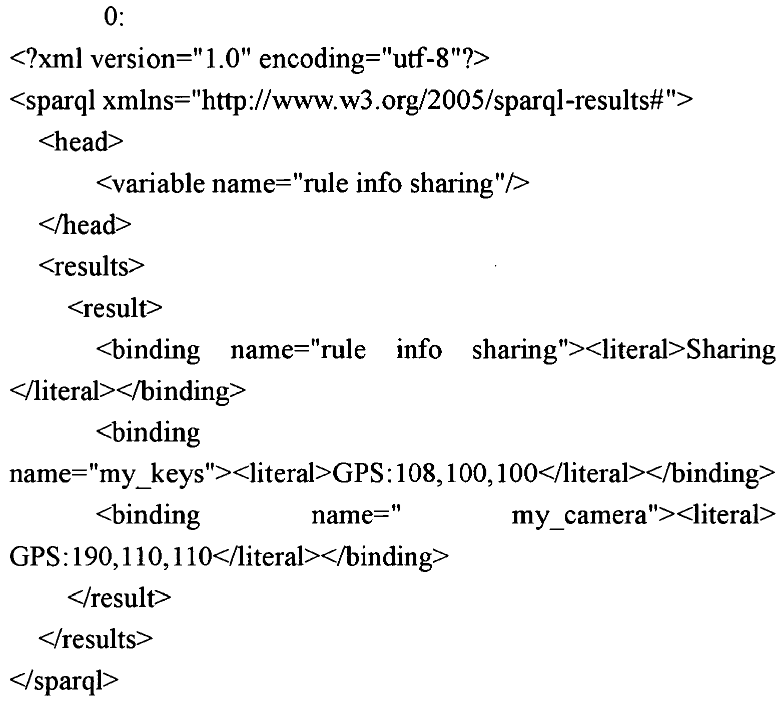 |

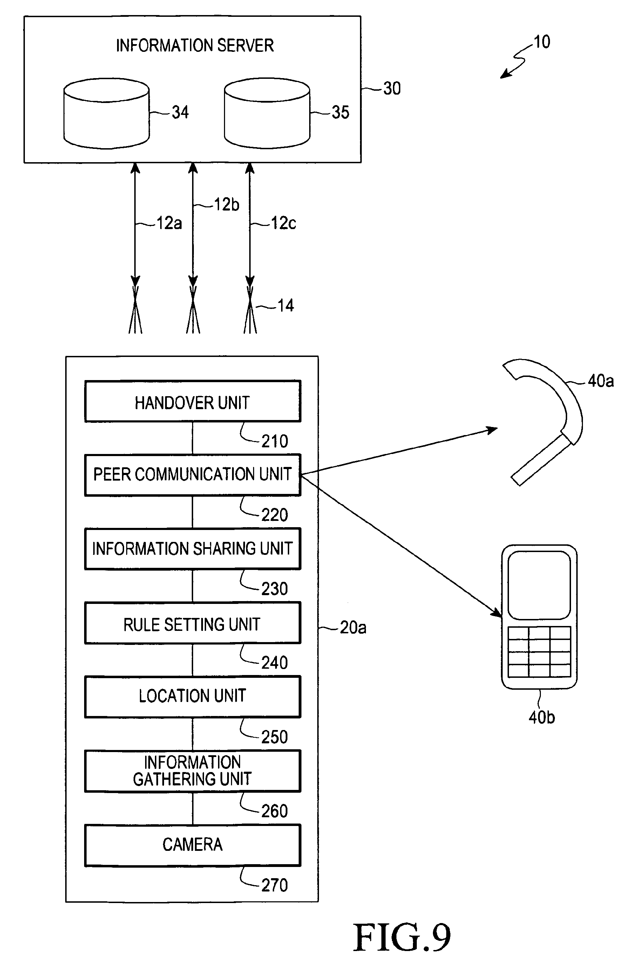

FIG. 9 illustrates another example of a wireless network system including the same mobile devices 20a, etc., as discussed above, according to an embodiment of the present invention.

Referring to FIG. 9, the first mobile device 20a further includes a camera 270. The information gathering unit 260 activates the camera 270 in order to gather an image of the location of the peer device 40a. The image is stored as part of the gathered peer information 50, to assist with locating the lost device.

The camera 270 may be left on whenever the mobile device 20a has sufficient battery. In this case, whenever the mobile device 20a comes into contact with an object that the user wishes to track, such as their car keys, the object is tagged by the mobile device and the image is gathered into the database of gathered information with the location, time, etc. Thus, when a user wishes to know the location of the item (i.e., the object), the gathered information provides an indication of the last time and place that the object was in contact with the mobile device 20a.

At least some elements of embodiments of the present invention discussed herein may be constructed, partially or wholly, using dedicated special-purpose hardware. Terms such as 'component', 'module' or 'unit' used herein may include, but are not limited to, a hardware device, such as a Field Programmable Gate Array (FPGA) or Application Specific Integrated Circuit (ASIC), which performs certain tasks.

At least some elements of embodiments of the present invention may be may be configured to reside on an addressable storage medium and be configured to execute on one or more processors. The elements may be implemented in the form of a tangible computer-readable storage medium having recorded thereon instructions that are, in use, executed by a computer or other suitable device. These elements may include, for example, components such as software components, object-oriented software components, class components and task components, processes, functions, attributes, procedures, subroutines, segments of program code, drivers, firmware, microcode, databases, data structures, tables, arrays, and variables. The tangible medium may take any suitable form, but examples include solid-state memory devices (e.g., Read Only Memory (ROM), Random Access Memory (RAM), Erasable Programmable ROM (EPROM), Electrically Erasable Programmable ROM (EEPROM), etc.), optical discs (e.g. Compact Discs, Digital Versatile Discs (DVDs), and etc.), magnetic discs, magnetic tapes and magneto-optic storage devices.

Embodiments of the present invention have been described with reference to the example components, modules and units discussed herein. Where appropriate, these functional elements may be combined into fewer elements or separated into additional elements. In some cases the elements are distributed over a plurality of separate computing devices that are coupled by a suitable communications network, including any suitable wired networks or wireless networks.

Although a few embodiments of the present invention have been shown and described, it will be appreciated by those skilled in the art that various changes and modifications might be made without departing from the scope of the invention, as defined in the appended claims.

## Claims

1. A wireless network system (10) including a plurality of wireless networks (12), the wireless network system (10) comprising:
a plurality of mobile devices (20) coupled to the plurality of wireless networks (12), the plurality of mobile devices (20) including at least a first mobile device (20a) and a second mobile device (20b); and
an information server (30) coupled to each of the plurality of wireless networks (12), wherein the information server is arranged to provide handover messages to the plurality of mobile devices (20) to assist the mobile devices (20) in performing a handover from one wireless network (12) to another wireless network (12);
wherein the first mobile device is arranged to negotiate information sharing rules with the information server (30);
wherein the first mobile device (20a) is arranged to provide, to the second mobile device (20b), shared information according to the information sharing rules; and
wherein the second mobile device (20b) is arranged to use the handover messages and the shared information to perform a predictive handover from one wireless network (12) to another wireless network (12).

2. The wireless network system (10) of claim 1, wherein the first mobile device (20a) is arranged to transmit the shared information directly to the second mobile device (20b) via peer communication.

3. The wireless network system (10) of claim 1, wherein the second mobile device (20b) is arranged to initiate the information sharing by sending an information sharing request to the information server (30).

4. The wireless network system (10) of claim 3, wherein the second mobile device (20b) is arranged to identify the first mobile device (20a) as being proximal to the second mobile device (20b) by using the peer communication, obtain a peer communication identifier corresponding to the first mobile device (20a), and provide the peer communication identifier to the information server (30) in the information sharing request.

5. The wireless network system (10) of claim 1, wherein the first mobile device (20a) is arranged to negotiate the information sharing rules with the information server (30) during a capability message exchange between the first mobile device (20a) and the information server (30).

6. The wireless network system (10) of claim 1, wherein the information sharing rules are based on a device status of a hardware component of the first mobile device (20a).

7. The wireless network system (10) of claim 1, wherein the first mobile device (20a) includes a location unit (250) arranged to obtain location information based on a geographical location of the first mobile device (20a);
wherein the first mobile device (20a) is arranged to share the location information with the second mobile device (20b) as the shared information; and
wherein the second mobile device (20b) is arranged to access a location based service over the wireless network (12) using the location information shared by the first mobile device (20a).

8. The wireless network system (10) of claim 1, wherein the information server (30) is arranged to aggregate a plurality of the mobile devices (20) into a sharing group based on location information, speed information and/or direction information provided by the mobile devices (20) which indicates that the plurality of mobile devices (20) are within a same location suitable for sharing information.

9. The wireless network system (10) of claim 1, wherein:
the first mobile device (20a) is arranged to gather object information about at least one object encountered by the first mobile device (20a) according to the information sharing rules; and
the information server (30) is arranged to receive the gathered object information from the first mobile device (20a) and selectively provide the gathered object information to at least one of the mobile devices (20) other than the first mobile device (20a), in response to a request for the object information.

10. The wireless network system (10) of claim 9, wherein the first mobile device (20a) is arranged to gather the object information as peer information about at least one peer communication device encountered by the peer communication or as image information captured by a camera of the first mobile device (20a).

11. The wireless network system (10) of claim 1, wherein the information server (30) includes:
an information sharing rules database (32) arranged to store information sharing rules relating to at least a first mobile device (20a) of the plurality of mobile devices (20); and
a handover information services unit (33) arranged to receive a request for information sharing from a second mobile device (20b) of the plurality of mobile devices (20), determine whether the first mobile device (20a) is capable of sharing information based on the stored information sharing rules, and issue, to the first mobile device (20a), a command that requests information sharing according to the information sharing rules for the first mobile device (20a), in order to share information with the second mobile device (20b) in response to the command.

12. The wireless network system (10) of claim 1, wherein at least one of the plurality of mobile devices (20) includes:
a handover unit (210) arranged to perform handovers within the wireless network system (10) according to handover messages provided by an information server (30);
a peer communication unit (220) arranged to communicate directly with at least one other mobile device (20) in the vicinity of the mobile device (20);
a rule setting unit (240) arranged to negotiate the information sharing rules with the information server (30); and
an information sharing unit (230) arranged to share information with the other mobile devices (20) according to the information sharing rules negotiated by the rule setting unit (240).

13. The wireless network system (10) of claim 12, where the at least one mobile device (20) further includes:
an information sharing unit (230) arranged to receive shared information from the other mobile devices (20) according to the information sharing rules negotiated by the rule setting unit (240).

14. A method of providing information in a wireless network system (10) including a plurality of wireless networks (12) and a plurality of mobile devices (20) coupled to the plurality of wireless networks (12), the plurality of mobile devices (20) including at least a first mobile device (20a) and a second mobile device (20b), the method comprising:
sending (401), by an information server (30) coupled to each of the plurality of wireless networks (12), handover messages to the plurality of mobile devices (20) to assist the mobile devices (20) in performing a handover from one wireless network (12) to another wireless network (12);
negotiating, by the first mobile device (20a), information sharing rules with the information server (30); and
providing, by the first mobile device (20a), shared information to a second mobile device (20b) according to the information sharing rules; and
using, at the second mobile device (20b), the handover messages and the shared information to perform a predictive handover from one wireless network (12) to another wireless network (12).

## Patentansprüche

1. Drahtloses Netzwerksystem (10) mit mehreren drahtlosen Netzwerken (12), wobei das drahtlose Netzwerksystem (10) Folgendes umfasst:
mehrere mobile Geräte (20), die mit den mehreren drahtlosen Netzwerken (12) verbunden sind, wobei die mehreren mobilen Geräte (20) wenigstens ein erstes mobiles Gerät (20a) und ein zweites mobiles Gerät (20b) beinhalten; und
einen Informationsserver (30), der mit jedem der mehreren drahtlosen Netzwerke (12) gekoppelt ist, wobei der Informationsserver so ausgelegt ist, dass er Übergabenachrichten zu den mehreren mobilen Geräten (20) übermittelt, um den mobilen Geräten (20) bei der Durchführung einer Übergabe von einem drahtlosen Netzwerk (12) zu einem anderen drahtlosen Netzwerk (12) zu helfen;
wobei das erste mobile Gerät so ausgelegt ist, dass es Regeln zur gemeinsamen Informationsnutzung mit dem Informationsserver (30) negoziiert;
wobei das erste mobile Gerät (20a) so ausgelegt ist, dass es gemeinsam genutzte Informationen gemäß den Regeln zur gemeinsamen Informationsnutzung zum zweiten mobilen Gerät (20b) sendet; und
wobei das zweite mobile Gerät (20b) so ausgelegt ist, dass es die Übergabenachrichten und die gemeinsam genutzten Informationen zum Durchführen einer prädiktiven Übergabe von einem drahtlosen Netzwerk (12) zu einem anderen drahtlosen Netzwerk (12) benutzt.

2. Drahtloses Netzwerksystem (10) nach Anspruch 1, wobei das erste mobile Gerät (20a) so ausgelegt ist, dass es die gemeinsam genutzten Informationen per Peer-Kommunikation direkt zum zweiten mobilen Gerät (20b) überträgt.

3. Drahtloses Netzwerksystem (10) nach Anspruch 1, wobei das zweite mobile Gerät (20b) so ausgelegt ist, dass es die gemeinsame Informationsnutzung durch Senden einer Anforderung zur gemeinsamen Informationsnutzung zum Informationsserver (30) einleitet.

4. Drahtloses Netzwerksystem (10) nach Anspruch 3, wobei das zweite mobile Gerät (20b) so ausgelegt ist, dass es anhand der Peer-Kommunikation das erste mobile Gerät (20a) als proximal zu dem zweiten mobilen Gerät (20b) identifiziert, eine Peer-Kommunikationskennung entsprechend dem ersten mobilen Gerät (20a) einholt und die Peer-Kommunikationskennung in der Anforderung zur gemeinsamen Informationsnutzung zum Informationsserver (30) übermittelt.

5. Drahtloses Netzwerksystem (10) nach Anspruch 1, wobei das erste mobile Gerät (20a) so ausgelegt ist, dass es die Regeln zur gemeinsamen Informationsnutzung mit dem Informationsserver (30) während eines Kapazitätsnachrichtenaustauschs zwischen dem ersten mobilen Gerät (20a) und dem Informationsserver (30) negoziiert.

6. Drahtloses Netzwerksystem (10) nach Anspruch 1, wobei die Regeln zur gemeinsamen Informationsnutzung auf einem Gerätestatus einer Hardware-Komponente des ersten mobilen Geräts (20a) basieren.

7. Drahtloses Netzwerksystem (10) nach Anspruch 1, wobei das erste mobile Gerät (20a) eine Ortungseinheit (250) zum Einholen von Ortsinformationen auf der Basis eines geografischen Ortes des ersten mobilen Geräts (20a) beinhaltet;
wobei das erste mobile Gerät (20a) so ausgelegt ist, dass es die Ortsinformationen mit dem zweiten mobilen Gerät (20b) als gemeinsam genutzte Informationen gemeinsam nutzt; und
wobei das zweite mobile Gerät (20b) so ausgelegt ist, dass es anhand der mit dem ersten mobilen Gerät (20a) gemeinsam genutzten Ortsinformationen über das drahtlose Netzwerk (12) auf einen ortsbasierten Dienst zugreift.

8. Drahtloses Netzwerksystem (10) nach Anspruch 1, wobei der Informationsserver (30) so ausgelegt ist, dass er mehrere der mobilen Geräte (20) auf der Basis von Ortsinformationen, Geschwindigkeitsinformationen und/oder Richtungsinformationen zu einer gemeinsamen Nutzungsgruppe zusammenfasst, die von den mobilen Geräten (20) gesendet werden und anzeigen, dass sich die mehreren mobilen Geräte (20) an einem selben Ort befinden, der zum gemeinsamen Nutzen von Informationen geeignet ist.

9. Drahtloses Netzwerksystem (10) nach Anspruch 1, wobei:
das erste mobile Gerät (20a) so ausgelegt ist, dass es Objektinformationen über wenigstens ein Objekt sammelt, auf das das erste mobile Gerät (20a) trifft, gemäß den Regeln zur gemeinsamen Informationsnutzung; und
der Informationsserver (30) so ausgelegt ist, dass er die gesammelten Objektinformationen vom ersten mobilen Gerät (20a) empfängt und die gesammelten Objektinformationen als Reaktion auf eine Anforderung von Objektinformationen selektiv zu wenigstens einem anderen der mobilen Geräte (20) als dem ersten mobilen Gerät (20a) sendet.

10. Drahtloses Netzwerksystem (10) nach Anspruch 9, wobei das erste mobile Gerät (20a) so ausgelegt ist, dass es die Objektinformationen als Peer-Informationen über wenigstens ein Peer-Kommunikationsgerät sammelt, auf das die Peer-Kommunikation trifft, oder als Bildinformationen, die von einer Kamera des ersten mobilen Geräts (20a) erfasst werden.

11. Drahtloses Netzwerksystem (10) nach Anspruch 1, wobei der Informationsserver (30) Folgendes beinhaltet:
eine Datenbank (32) mit Regeln zur gemeinsamen Informationsnutzung zum Speichern von Regeln zur gemeinsamen Informationsnutzung in Bezug auf wenigstens ein erstes mobiles Gerät (20a) der mehreren mobilen Geräte (20); und
eine Übergabeinformationsdiensteeinheit (33) zum Empfangen einer Anforderung zur gemeinsamen Informationsnutzung von einem zweiten mobilen Gerät (20b) der mehreren mobilen Geräte (20), Ermitteln, ob das erste mobile Gerät (20a) Informationen gemeinsam nutzen kann, auf der Basis der gespeicherten Regeln zur gemeinsamen Informationsnutzung, und Ausgeben eines Befehls an das erste mobile Gerät (20a), der gemeinsame Informationsnutzung gemäß den Regeln zur gemeinsamen Informationsnutzung für das erste mobile Gerät (20a) anfordert, um Informationen mit dem zweiten mobilen Gerät (20b) als Reaktion auf den Befehl gemeinsam zu nutzen.

12. Drahtloses Netzwerksystem (10) nach Anspruch 1, wobei wenigstens eines der mehreren mobilen Geräte (20) Folgendes beinhaltet:
eine Übergabeeinheit (210) zum Durchführen von Übergaben innerhalb des drahtlosen Netzwerksystems (10) gemäß von einem Informationsserver (30) übermittelten Übergabenachrichten;
eine Peer-Kommunikationseinheit (220) zum direkten Kommunizieren mit wenigstens einem anderen mobilen Gerät (20) in der Nähe des mobilen Geräts (20);
eine Regelfestlegungseinheit (240) zum Negoziieren der Regeln zur gemeinsamen Informationsnutzung mit dem Informationsserver (30); und
eine Einheit (230) zur gemeinsamen Informationsnutzung zum gemeinsamen Nutzen von Informationen mit den anderen mobilen Geräten (20) gemäß den von der Regelfestlegungseinheit (240) negoziierten Regeln zur gemeinsamen Informationsnutzung.

13. Drahtloses Netzwerksystem (10) nach Anspruch 12, wobei das wenigstens eine mobile Gerät (20) ferner Folgendes beinhaltet:
eine Einheit (230) zur gemeinsamen Informationsnutzung zum Empfangen von gemeinsam genutzten Informationen von den anderen mobilen Geräten (20) gemäß den von der Regelfestlegungseinheit (240) negoziierten Regeln zur gemeinsamen Informationsnutzung.

14. Verfahren zum Bereitstellen von Informationen in einem drahtlosen Netzwerksystem (10) mit mehreren drahtlosen Netzwerken (12) und mehreren mobilen Geräten (20), die mit den mehreren drahtlosen Netzwerken (12) gekoppelt sind, wobei die mehreren mobilen Geräte (20) wenigstens ein mobiles Gerät (20a) und ein zweites mobiles Gerät (20b) beinhalten, wobei das Verfahren Folgendes beinhaltet:
Senden (401), durch einen mit jedem der mehreren drahtlosen Netzwerke (12) gekoppelten Informationsserver (30), von Übergabenachrichten zu den mehreren mobilen Geräten (20), um den mobilen Geräten (20) bei der Durchführung einer Übergabe von einem drahtlosen Netzwerk (12) zu einem anderen drahtlosen Netzwerk (12) zu helfen;
Negoziieren, durch das erste mobile Gerät (20a), von Regeln zur gemeinsamen Informationsnutzung mit dem Informationsserver (30); und
Übertragen, durch das erste mobile Gerät (20a) von gemeinsam genutzten Informationen zu einem zweiten mobilen Gerät (20b) gemäß den Regeln zur gemeinsamen Informationsnutzung; und
Benutzen, am zweiten mobilen Gerät (20b), der Übergabenachrichten und der gemeinsam genutzten Informationen zum Durchführen einer prädiktiven Übergabe von einem drahtlosen Netzwerk (12) zu einem anderen drahtlosen Netzwerk (12).

## Revendications

1. Système de réseau sans fil (10) englobant une pluralité de réseaux sans fil (12), le système de réseau sans fil (10) comprenant :
une pluralité de dispositifs mobiles (20) laquelle est couplée à la pluralité de réseaux sans fil (12), la pluralité de dispositifs mobiles (20) englobant au moins un premier dispositif mobile (20a) et un deuxième dispositif mobile (20b) ; et
un serveur d'informations (30) couplé à chaque réseau sans fil parmi la pluralité de réseaux sans fil (12), alors que le serveur d'informations est agencé de façon à fournir des messages de transfert à la pluralité de dispositifs mobiles (20) pour aider les dispositifs mobiles (20) à réaliser un transfert depuis un réseau sans fil (12) vers un autre réseau sans fil (12) ;
cas dans lequel le premier dispositif mobile est agencé de façon à négocier des règles de partage d'informations avec le serveur d'informations (30) ;
cas dans lequel le premier dispositif mobile (20a) est agencé de façon à fournir au deuxième dispositif mobile (20b) des informations partagées en fonction des règles de partage d'informations ; et
cas dans lequel le deuxième dispositif mobile (20b) est agencé de façon à utiliser les messages de transfert et les informations partagées pour réaliser un transfert prédictif depuis un réseau sans fil (12) vers un autre réseau sans fil (12).

2. Système de réseau sans fil (10) selon la revendication 1, le premier dispositif mobile (20a) étant agencé de façon à transmettre directement les informations partagées au deuxième dispositif mobile (20b) par le biais d'une communication entre pairs.

3. Système de réseau sans fil (10) selon la revendication 1, le deuxième dispositif mobile (20b) étant agencé de façon à amorcer le partage d'informations grâce à l'envoi d'une demande de partage d'informations à destination du serveur d'informations (30).

4. Système de réseau sans fil (10) selon la revendication 3, le deuxième dispositif mobile (20b) étant agencé de façon à identifier le premier dispositif mobile (20a) comme étant proche du deuxième dispositif mobile (20b) grâce à l'utilisation de la communication entre pairs, à obtenir un identifiant de communication entre pairs lequel correspond au premier dispositif mobile (20a) et à fournir l'identifiant de communication entre pairs au serveur d'informations (30) dans le cadre de la demande de partage d'informations.

5. Système de réseau sans fil (10) selon la revendication 1, le premier dispositif mobile (20a) étant agencé de façon à négocier les règles de partage d'informations avec le serveur d'informations (30) au cours d'un échange de messages de capacité entre le premier dispositif mobile (20a) et le serveur d'informations (30).

6. Système de réseau sans fil (10) selon la revendication 1, les règles de partage d'informations étant fondées sur un statut de dispositif d'un composant matériel du premier dispositif mobile (20a).

7. Système de réseau sans fil (10) selon la revendication 1, le premier dispositif mobile (20a) comportant une unité de localisation (250) agencée de façon à obtenir des informations de localisation fondées sur un emplacement géographique du premier dispositif mobile (20a) ;
cas dans lequel le premier dispositif mobile (20a) est agencé de façon à partager les informations de localisation avec le deuxième dispositif mobile (20b) sous la forme d'informations partagées ; et
cas dans lequel le deuxième dispositif mobile (20b) est agencé de façon à accéder à un service géodépendant par l'intermédiaire du réseau sans fil (12) grâce à l'utilisation des informations de localisation partagées par le premier dispositif mobile (20a).

8. Système de réseau sans fil (10) selon la revendication 1, le serveur d'informations (30) étant agencé de façon à rassembler une pluralité de dispositifs mobiles (20) en un groupe de partage fondé sur des informations de localisation, des informations de vitesse et/ou des informations de direction fournies par les dispositifs mobiles (20) lesquelles indiquent que la pluralité de dispositifs mobiles (20) se trouve dans les limites d'une même localisation convenant au partage d'informations.

9. Système de réseau sans fil (10) selon la revendication 1 :
le premier dispositif mobile (20a) étant agencé de façon à collecter des informations d'objet au sujet d'au moins un objet rencontré par le premier dispositif mobile (20a) en fonction des règles de partage d'informations ; et
le serveur d'informations (30) étant agencé de façon à recevoir les informations d'objet collectées qui proviennent du premier dispositif mobile (20a), et à fournir sélectivement les informations d'objet collectées à l'un au moins des dispositifs mobiles (20), lequel est différent du premier dispositif mobile (20a), en réponse à une demande pour des informations d'objet.

10. Système de réseau sans fil (10) selon la revendication 9, le premier dispositif mobile (20a) étant agencé de façon à collecter les informations d'objet en tant qu'informations entre pairs au sujet d'au moins un dispositif de communication entre pairs rencontré par la communication entre pairs, ou en tant qu'informations d'image saisies par une caméra du premier dispositif mobile (20a).

11. Système de réseau sans fil (10) selon la revendication 1, le serveur d'informations (30) comportant :
une base de données pour des règles de partage d'informations (32) agencée de façon à stocker des règles de partage d'informations relatives à au moins un premier dispositif mobile (20a) parmi la pluralité de dispositifs mobiles (20) ; et
une unité de services d'informations de transfert (33) agencée de façon à recevoir une demande pour un partage d'informations en provenance d'un deuxième dispositif mobile (20b) parmi la pluralité de dispositifs mobiles (20), à déterminer si le premier dispositif mobile (20a) est capable, ou non, de partager des informations sur la base des règles de partage d'informations stockées, et à émettre vers le premier dispositif mobile (20a) une instruction qui demande un partage d'informations en fonction des règles de partage d'informations pour le premier dispositif mobile (20a), dans le but de partager des informations avec le deuxième dispositif mobile (20b), en réaction à l'instruction.

12. Système de réseau sans fil (10) selon la revendication 1, au moins un dispositif mobile parmi la pluralité de dispositifs mobiles (20) comportant :
une unité de transfert (210) agencée de façon à réaliser des transferts au sein du système de réseau sans fil (10), en fonction des messages de transfert fournis par un serveur d'informations (30) ;
une unité de communication entre pairs (220) agencée de façon à communiquer directement avec au moins un autre dispositif mobile (20) situé à proximité du dispositif mobile (20) ;
une unité d'établissement des règles (240) agencée de façon à négocier les règles de partage d'informations avec le serveur d'informations (30) ; et
une unité de partage d'informations (230) agencée de façon à partager des informations avec les autres dispositifs mobiles (20) en fonction des règles de partage d'informations ayant été négociées par l'unité d'établissement des règles (240).

13. Système de réseau sans fil (10) selon la revendication 12, au sein duquel ledit au moins un dispositif mobile (20) englobe en outre :
une unité de partage d'informations (230) agencée de façon à recevoir des informations partagées en provenance des autres dispositifs mobiles (20) en fonction des règles de partage d'informations ayant été négociées par l'unité d'établissement des règles (240).

14. Procédé permettant de fournir des informations dans un système de réseau sans fil (10) englobant une pluralité de réseaux sans fil (12) et une pluralité de dispositifs mobiles (20) laquelle est couplée à la pluralité de réseaux sans fil (12), la pluralité de dispositifs mobiles (20) englobant au moins un premier dispositif mobile (20a) et un deuxième dispositif mobile (20b), le procédé comprenant les opérations consistant à :
faire envoyer (401), par un serveur d'informations (30) couplé à chaque réseau sans fil parmi la pluralité de réseaux sans fil (12), des messages de transfert à la pluralité de dispositifs mobiles (20) afin d'aider les dispositifs mobiles (20) à réaliser un transfert depuis un réseau sans fil (12) vers un autre réseau sans fil (12) ;
faire négocier, par le premier dispositif mobile (20a), des règles de partage d'informations avec le serveur d'informations (30) ; et
faire fournir, par le premier dispositif mobile (20a), des informations partagées au deuxième dispositif mobile (20b) en fonction des règles de partage d'informations ; et
utiliser, au niveau du deuxième dispositif mobile (20), les messages de transfert et les informations partagées pour réaliser un transfert prédictif depuis un réseau sans fil (12) vers un autre réseau sans fil (12).
